# EUROPEAN PATENT APPLICATION

(11) **EP 2 835 279 A1**
(43) Date of publication of application: **11.02.2015**
(21) Application number: 14177648.4
(22) Date of filing: 18.07.2014
(51) Int. Cl.: B60L 5/36, B60L 9/28, B60L 9/08, B60L 9/14, B60L 9/32

(54) **Train set and method of increasing cars constituting train set**

(30) Priority: 08.08.2013 JP 2013164674
(71) Applicant: Hitachi Ltd., Tokyo (JP)
(72) Inventor: Shimada, Motomi, Chiyoda-ku, Tokyo 100-8280 (JP); Iwasaki, Mitsuo, Chiyoda-ku, Tokyo 100-8280 (JP); Okamoto, Kenji, Chiyoda-ku, Tokyo 100-8280 (JP); Inarida, Satoru, Chiyoda-ku, Tokyo 100-8280 (JP); Ando, Takeshi, Chiyoda-ku, Tokyo 100-8280 (JP); Mochizuki, Kento, Chiyoda-ku, Tokyo 100-8280 (JP)
(74) Representative: Gill, Stephen Charles

(57) **Abstract**

An object of the invention is to increase and decrease cars of a train set one by one while dispersing axle load of a train constituting a train set.

In order to achieve the object, a train set constituted by coupling a plurality of cars of the invention includes a current collector that obtains power from outside of a train, a transformation means that transforms the power supplied from the current collector, a power conversion means that converts the power output from the transformation means into AC power having a variable voltage and variable frequency, an AC motor driven by the power conversion means, a first power supply cable having one end connected to a secondary side of the transformation means and the other end connected to the power conversion means and supplying the power output from the transformation means to the power conversion means, and a second power supply cable having one end that can be connected to the secondary side of the transformation means and the other end electrically opened.

## Description

### BACKGROUND OF THE INVENTION

### 1. Field of the Invention

The present invention relates to a train set.

### 2. Description of the Related Art

Generally, the numbers of passengers using railroads vary depending on areas, sections, seasons, hours of train services. Further, in transportation using railroads, the volume of transportation is not always the same. Accordingly, flexible adjustment of the number of cars constituting a train set according to the number of passengers and the volume of transportation leads to improvement in operation efficiency and reduction in operation cost. As a technology of changing the number of cars, there is JP-A-4-126658 (Patent Document 1). Patent Document 1 discloses, in a set including a plurality of power units of three cars as a unit in which one power receiving car is provided on each side of a power supply car, the technology of increasing and decreasing the number of cars one by one by providing trailers between the respective power units.

Further, in order to reduce the maintenance cost of tracks, it is desirable to disperse pressure applied to the tracks by the train. As a technology of dispersing axle load of cars constituting a set, there is EP 2292125 A1 (Patent Document 2). Patent Document 2 discloses a technology of providing spaces under the floors of some cars constituting the set (Patent Document 2, Fig. 2: 6, 14, 16) for disposing batteries and compressors in the spaces.

In Patent Document 1, there is a problem of complicated change of set for increasing and decreasing cars one by one from an arbitrary set. For example, in the case of a set of 17 cars formed by decoupling the third to fifth cars from a 20-car set, to change the set to an 18-car set, the three cars once decoupled should be returned to form a 20-car set, and then, the second car and the twelfth car or the tenth car and the eleventh car should be decoupled. The change of set is not easy.

In Patent Document 2, there is no assumption that the number of cars is changed.

### SUMMARY OF THE INVENTION

According to the invention, a train set that easily realizes increase and decrease of cars one by one by dispersing axle load of a train constituting a set is provided.

A train set constituted by coupling a plurality of cars includes a current collector that obtains power from outside of a train, a transformation means that transforms the power supplied from the current collector, a power conversion means that converts the power output from the transformation means into AC power having a variable voltage and variable frequency (VVVF), an AC motor driven by the power conversion means, a first power supply cable having one end connected to a secondary side of the transformation means and the other end connected to the power conversion means and supplying the power output from the transformation means to the power conversion means, and a second power supply cable having one end that can be connected to the secondary side of the transformation means and the other end electrically opened.

Alternatively, a method of increasing cars constituting a train set including a current collector that obtains power from outside of a train, a transformation means that transforms the power supplied from the current collector, a power conversion means that converts the power output from the transformation means into AC power having a variable voltage and variable frequency, and an AC motor driven by the power conversion means, includes, when another drive car having the power conversion means and the AC motor is added to the train set, coupling the drive car to the car constituting the train set and having a power supply cable with an end connected to an electrically opened connecting terminal, supplying the power from the transformation means via the connecting terminal, and thereby, driving the AC motor of the drive car.

According to the train set of the invention, a train set that flexibly responds to changes in the number of cars with suppressed load on tracks may be provided.

### BRIEF DESCRIPTION OF THE DRAWINGS

Fig. 1 is a drive system diagram showing one embodiment of the invention.
Fig. 2 is a drive system diagram showing one embodiment of the invention.
Fig. 3 shows a configuration example within a train set when the invention is applied to a six-car set and a configuration example of an additional car.
Fig. 4 shows a configuration example within a train set when the invention is applied to a six-car set and the set is changed to a seven-car set.
Fig. 5 is a drive system diagram showing one embodiment of the invention.
Fig. 6 shows a configuration example within a train set when the invention is applied to a six-car set and a configuration example of an additional car.
Fig. 7 shows a configuration example within a train set when the invention is applied to a six-car set and the set is changed to a seven-car set.
Fig. 8 shows a configuration example within a train set when the invention is applied to a three-car set and a configuration example of additional cars.
Fig. 9 shows a configuration example within a train set when the invention is applied to a three-car set and the set is changed to a four-car set.
Fig. 10 shows a configuration example within a train set when the invention is applied to a three-car set and the set is changed to a five-car set.
Fig. 11 shows a configuration example within a train set when the invention is applied to a single-car set and a configuration example of additional cars.
Fig. 12 shows images of train sets when the invention is applied to a six-car set and the set is changed to a seven-car set.

### DESCRIPTION OF THE EMBODIMENTS

As below, embodiments of the invention will be explained using the drawings.

### [Example 1]

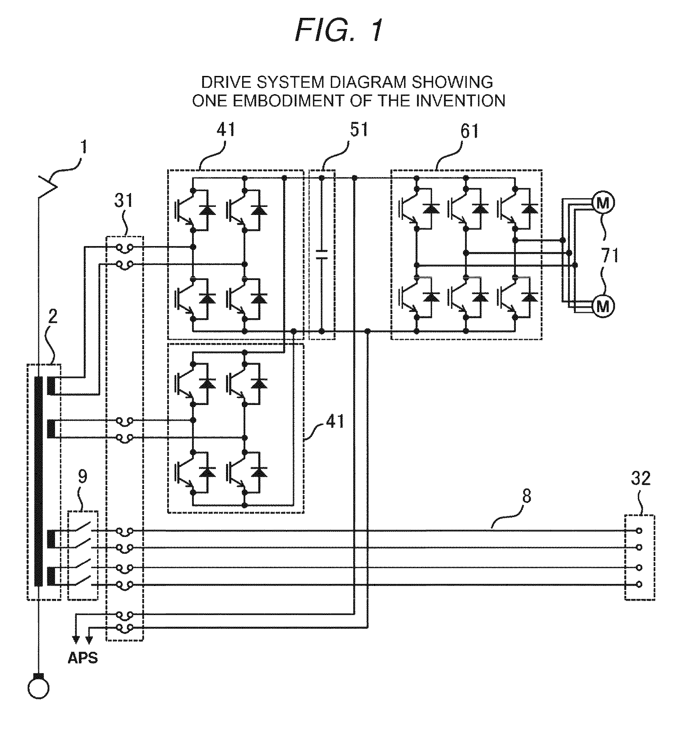

Fig. 1 shows a drive system of the example. In the specification, a car including a power conversion means and an AC motor is referred to as "Motor car" and a car without them is referred to as "Trailer". The example realizes addition of another Motor car to a train set. When a Trailer is added into a train set, communication lines of cars before and after the Trailer to be added may be installed through the train. That is, the example shows a train set to which a car, regardless of the Motor car and the Trailer, may be added. In the specification, addition of another car to a train constituting a train set is referred to as "car increase" and removable of a car from a train constituting a train set is referred to as "car decrease".

A train set includes a drive system for rolling stock having a current collector 1 that receives single-phase AC power from a power wire (not shown) connected to a substation as a single-phase AC power source, a transformation means 2 that steps down a power wire voltage, power conversion means for power source 41 that convert the transformed AC power into DC power, a power line coupler 31 connected between the transformation means 2 and the power conversion means for power source 41, a smoothing capacitor 51 connected to the DC sides of the power conversion means for power source 41 and smoothing a DC voltage, a power conversion means for motor drive 61 including a combination of semiconductor devices and driving AC motors 71 using a voltage on both ends of the smoothing capacitor 51 as a voltage source, an opened terminal 32 electrically opened, a power supply cable 8 that supplies power between the opened terminal 32 and the transformation means 2, and a contactor 9 that can cut off power of the power supply cable 8.

The power conversion means for power source 41 and the power conversion means for motor drive 61 are collectively referred to as "power conversion means". Further, in the example, an operable train in which two or more cars are coupled is referred to as "train set", however, the advantages of the example may be obtained by a train operated with a single car as long as the train has a device configuration shown in Fig. 1. The respective devices in Fig. 1 may be freely provided in the cars constituting the train set, however, in order to disperse axle load, it is desirable that the transformation means 2 and the power conversion means for power source 41 and the power conversion means for motor drive 61 are mounted on different cars, for example. Using the above described DC power, power supply to a power conversion means APS (auxiliary power unit) that generates commercial AC power to be supplied to air-conditioners within the cars and lightings may be performed from the output side of the smoothing capacitor 51. The power line coupler 31 is wiring means for providing power lines over movable parts and installed between cars for easy coupling and decoupling of the cars. A pantograph or a third rail may be used for the current collector 1, a converter may be used for the power conversion means for power source 41, and an inverter may be used for the power conversion means for motor drive 61. The power supply cable can supply single-phase AC. Note that the power line coupler connects or does not connect lines, and consequently, may selectively control interruption and conduction. Thus, the power line coupler is referred to as "Line Breaker means".

The train set on which the devices in Fig. 1 are mounted travels while supplying power to the AC motors 71. When the train set shown in Fig. 1 is operated, the contactor 9 is turned to an opened state in which the contactor is opened. Thereby, the opened terminal 32 on the end of the power supply cable 8 is prevented from being at a high voltage. The contactor 9 may be provided between the transformation means 2 and the opened terminal 32. The contactor 9 is a Line Breaker means that can selectively control interruption and conduction, and interrupts in the opened state in which the contactor is opened and conducts in a closed state in which the contactor is closed. The opened terminal 32 is provided in one of the cars constituting the train set. When another Motor car is added to the train set in Fig. 1, the Motor car is coupled to the car having the opened terminal 32 and power is supplied to the Motor car through the opened terminal 32.

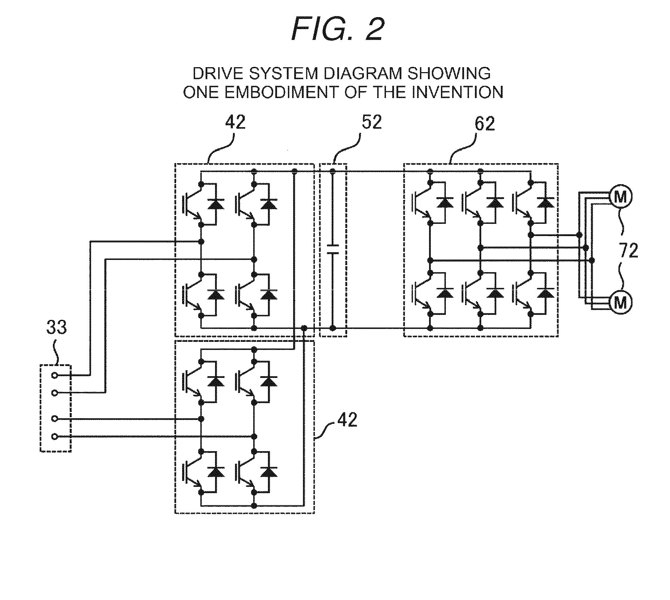

Fig. 2 shows devices mounted on a Motor car that can be added to the train set on which the devices in Fig. 1 are mounted. The Motor car is coupled to the car having the opened terminal 32 in Fig. 1, and the opened terminal 32 and an opened terminal 33 of the additional Motor car are connected. After the electrical connection between the opened terminal 32 and the opened terminal 33 is confirmed, the contactor 9 in Fig. 1 is closed and the power from the transformation means 2 is supplied to AC motors 72. Power conversion means for power source 42, a smoothing capacitor 52, a power conversion means for motor drive 62 may be the same as those in Fig. 1. Obviously, if power supply from the transformation means 2 is not performed when the Motor car is added, the time when the contactor 9 is closed may be prior to the coupling of the opened terminal 32 and the opened terminal 33.

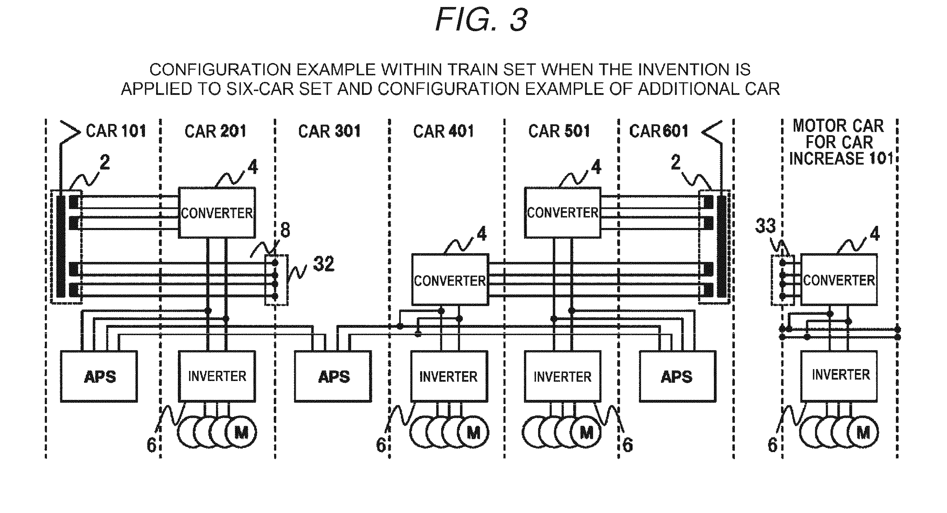

Fig. 3 shows a device configuration of the respective cars when another Motor car for car increase 101 is increased to a six-car train constituted by cars 101 to 601. The six-car train set can travel under the condition and have three Motor cars of the cars 201, 401, and 501. The opened terminal 32 is provided in the car 201, and the Motor car for car increase 101 is inserted between the car 201 and the car 301. The coupling is easier when the opened terminal 32 is provided at the car 301 side than at the car 101 side of the coupling surfaces of the car 201. Further, in Fig. 3, contact terminals provided on the power supply cable 8 between the transformation means 2 and the opened terminal 32 are omitted.

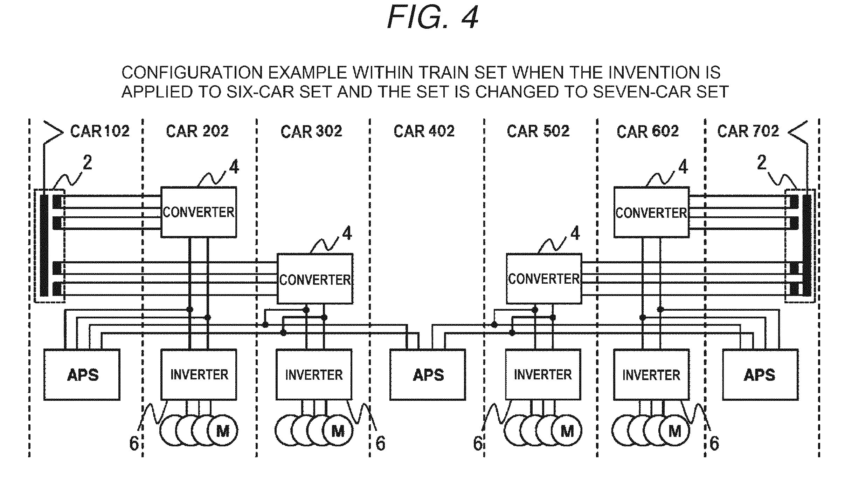

Fig. 4 shows a condition in which the Motor car for car increase 101 is added between the car 201 and the car 301 of the six-car set in Fig. 3 and a seven-car train set constituted by cars 102 to 702 is obtained. When the Motor car for car increase 101 is inserted, the opened terminal 32 and the opened terminal 33 in Fig. 3 are connected. Regarding the method of connecting the opened terminal 32 and the opened terminal 33, structures in which the terminals themselves can be connected to each other may be provided or another connecting cable may be prepared for connection between the terminals. After the Motor car for car increase 101 is inserted and the electrical connection between the opened terminal 32 and the opened terminal 33 is confirmed, a contactor (not shown) provided on the power supply cable 8 is closed and the power from the transformation means 2 of the car 102 is supplied to a converter 4 of the car 302, and thereby, the AC motor as the motor of the car 302 is controlled by an inverter 6. Through connection such that the output power of the converter of the car 302 may also be supplied to an APS, even when the converter 4 of the car 202 fails, the APS of the car 102 can be operated by the power supply from the converter 4 of the car 302. When one Motor car is decreased from the seven-car train in Fig. 4, the decrease may be performed in the reverse order to the addition. In the example, the car having the power conversion means and the AC motor is referred to the Motor car, however, for example, if the AC motor is provided in the car 301, the Motor car for car increase 101 may not have the AC motor.

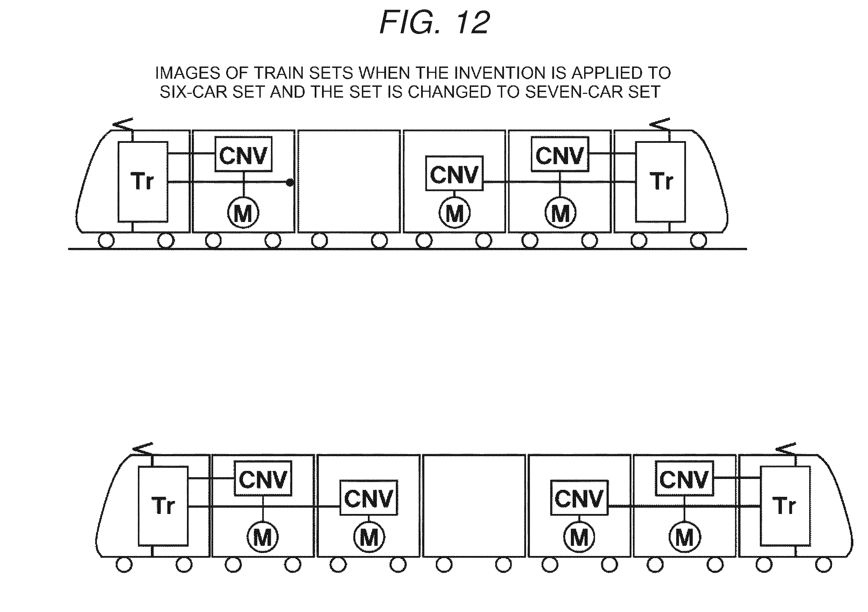

Fig. 12 shows images of train sets before and after increase of the Motor car in Figs. 3 and 4.

During operation of the train set, power supply via the opened terminal 32 is not performed, however, another power conversion means or the like may be provided for use for an auxiliary device such as the APS during operation of the train set. In this regard, the contactor 9 may be closed in the conduction state.

### [Example 2]

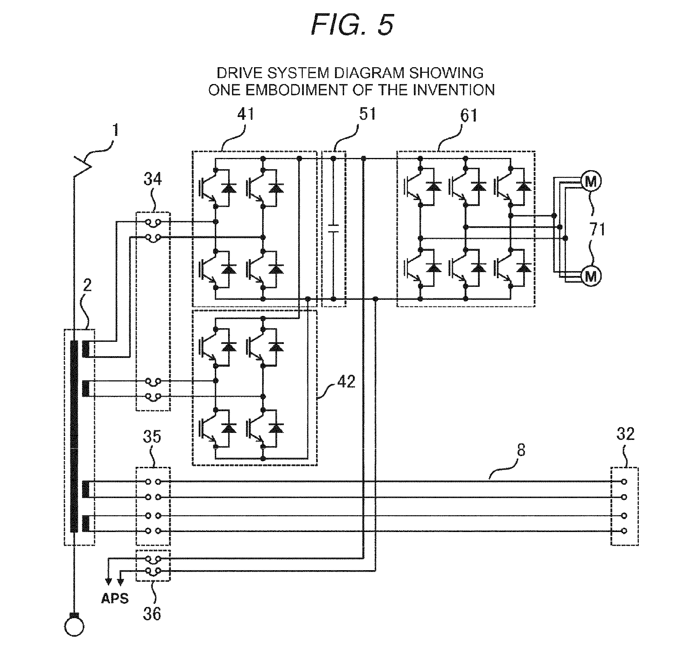

Fig. 5 shows a second example using the drive system of the train set that can increase the Motor car like the example 1. The configurations of the current collector 1, the transformation means 2, the power conversion means for power source 41, the smoothing capacitor 51, the power conversion means for motor drive 61, the AC motor 71 are the same as those in the example 1, and the train set on which the configuration in Fig. 5 is mounted drives the AC motors 71. Power line couplers 34, 36 and a contactor 35 may be installed in the connections between the respective cars.

The configuration of the Motor car added to the example 2 may be the same as that in Fig. 2. In the case of the train set in the example 2, the contactor 35 is opened, and thereby, the train set may be operated without any voltage applied to the section between the contactor 35 and the contactor 32 on the power supply cable 8 for Motor car addition. Further, a high voltage is applied to the contactor 35, and the safety is improved by attaching an insulating means to the opened terminal at the transformation means side of the contactor 35. An insulating material may be used for the detachable insulating means, including a rubber cap, a ceramic cap, and a cap supported by an insulating means, for example.

When the Motor car is added to the train set, the attached insulating means is detached, the opened terminal 32 in Fig. 5 and the opened terminal 33 of the additional Motor car are connected. After the electrical connection between the respective terminals is confirmed, the contactor 35 is closed, and thereby, the power from the transformation means 2 may be supplied to the AC motor 72 of the added Motor car. Further, like the example 1, if the power supply from the transformation means 2 is stopped when the Motor car is added, the time when the contactor 35 is closed may be prior to the connection of the respective terminals.

Furthermore, in the example, a method of adding the Motor car in the closed state of the contactor 35 and a method of adding the Motor car without the contactor 35 are also considered. In this case, after the power supply from the transformation means 2 is stopped, the opened terminal 33 of the additional Motor car and the opened terminal 32 are connected. After the electrical connection between the opened terminal 33 and the opened terminal 32 is confirmed, the power supply from the transformation means 2 is started, and thereby, addition of the Motor car into the train set may be safely performed.

In order to secure more safety, the contactor 9 as the Line Breaker means used in the example 1 may be provided on the power supply cable 8 in addition to the insulating means. Further, regardless of whether or not a high voltage is applied, the insulating means is provided on the opened end of the contactor 35 in Fig. 5 and the respective opened terminals 32, and thereby, the power supply cable 8 may be further protected.

### [Example 3]

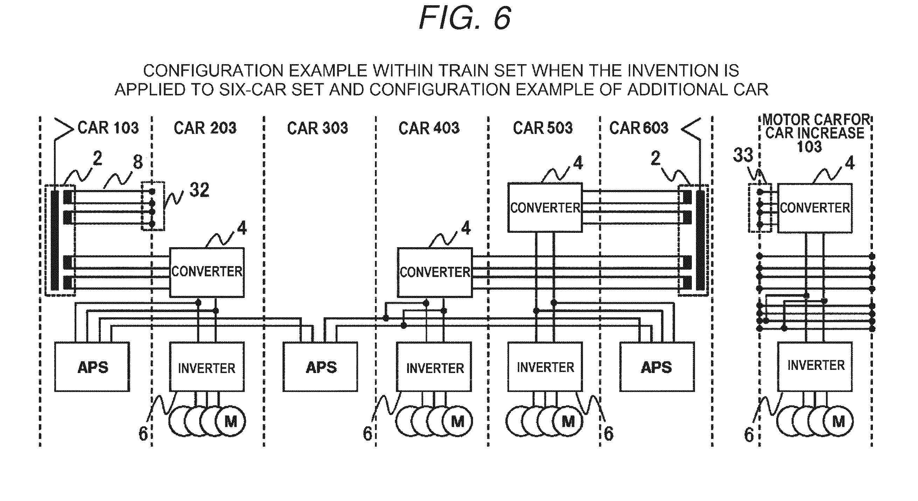

Fig. 6 shows a third example using the configuration of the example 1.

In the example 1, the Motor car for car increase 101 is added not to the next to the car 101 having the transformation means 2, but between the car 201 and the car 301. On the other hand, in the example, a Motor car for car increase 103 is coupled between a car 103 having the transformation means 2 and a car 203 coupled to the car 103 so that the Motor car may be added to the train set. The drive system of the example may be the same as that in Fig. 1 or Fig. 3 and realized by adjustment of the length of the power supply cable 8. In the case of the example, the length of the power supply cable 8 provided in the train set constituted by cars 103 to 603 may be shortened by an amount of about one car compared to the example 1. Thus, in comparison of conditions of the six-car trains between the example 1 and the example 3, the example is lighter by at least an amount of the power supply cable of one car, and more efficient operation may be performed.

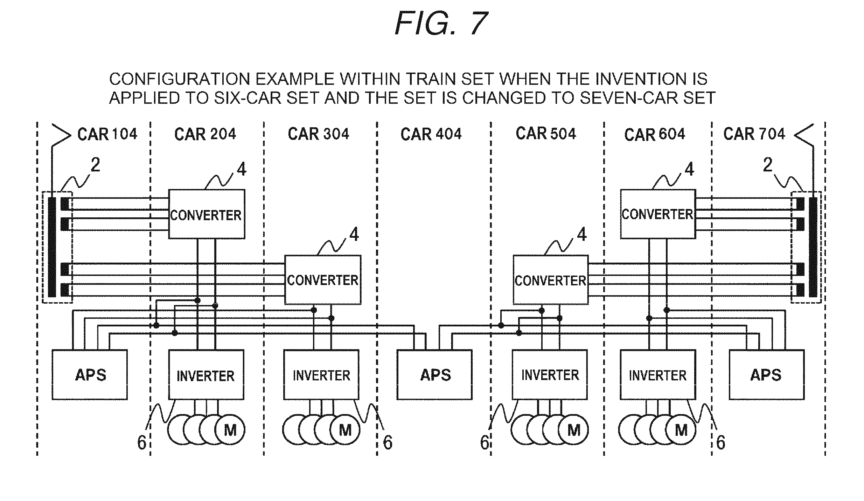

Fig. 7 shows a condition in which the Motor car for car increase 103 in Fig. 6 is added.

### [Example 4]

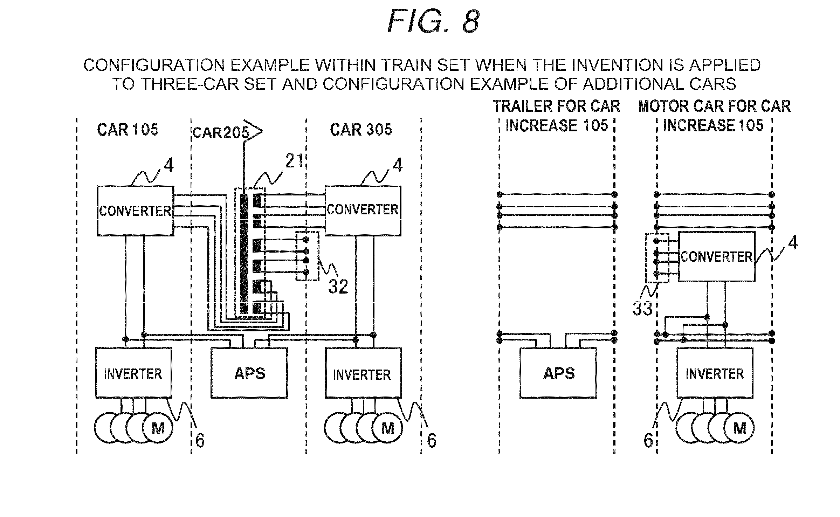

Fig. 8 shows an example in which a Trailer for car increase 105 and a Motor car for car increase 105 are sequentially added to a train set constituted by cars 105 to 305. Which of the Trailer for car increase 105 and the Motor car for car increase 105 is first added is not determined, and, in the example, the Motor car for car increase 105 is added first. Further, in the example, one transformation means 21 may supply power to the three converters 4, however, the advantage of the invention that the Motor cars can be added one by one is independent of the number of converters to which the transformation means can supply power.

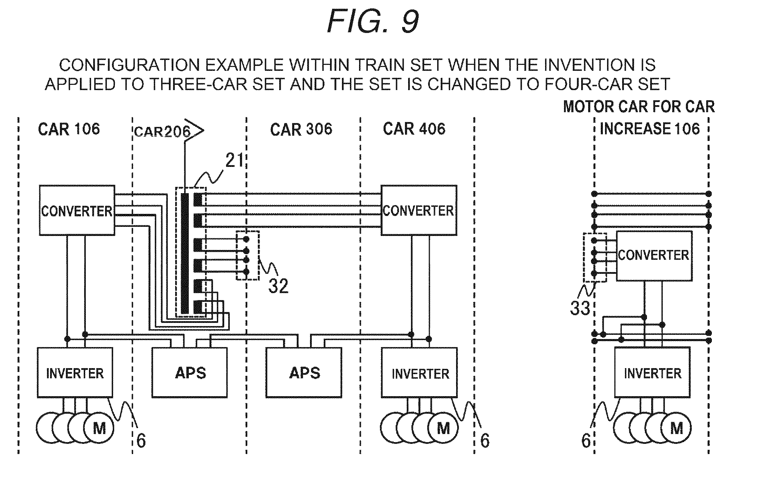

Fig. 9 shows a drive system within a train set when the Trailer for car increase 105 is increased between the car 205 and the car 305 of the train set in Fig. 8. The Trailer for car increase 105 corresponds to a car 306 in Fig. 9. As described above, when the Trailer is added into the train set, it is necessary for the Trailer to have at least an installation line.

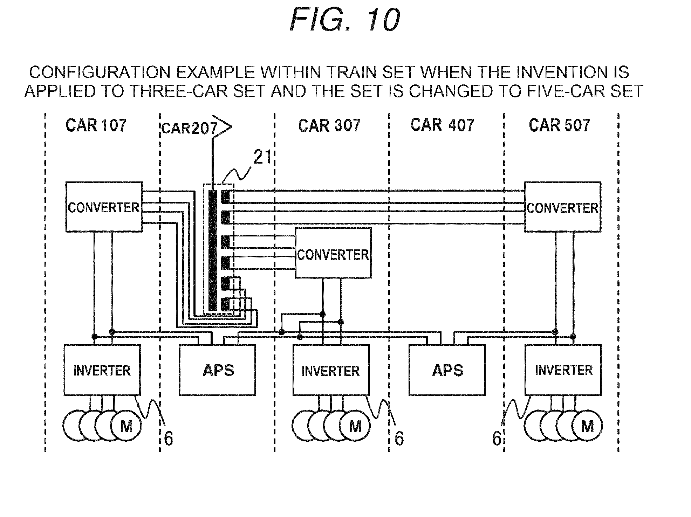

Fig. 10 shows a drive system within a train set when a Motor car for car increase 106 is added between the car 206 and the car 306 of the train set in Fig. 9. The opened terminal 32 and the opened terminal 33 are coupled and connected, and thereby, power from the transformation means 21 may be supplied to the converter of a car 307 in Fig. 10.

If the Motor car for car increase 105 is added prior to the Trailer for car increase 105 in the train set in Fig. 8, the Motor car for car increase 105 may be added between the car 205 and the car 305.

Further, when cars 107, 307, 507 as Motor cars are removed from the condition in Fig. 10, an insulating means is added to the opened terminal of the power supply cable after removal, and thereby, safe operation may be realized in the train set after removal of the Motor cars.

### [Example 5]

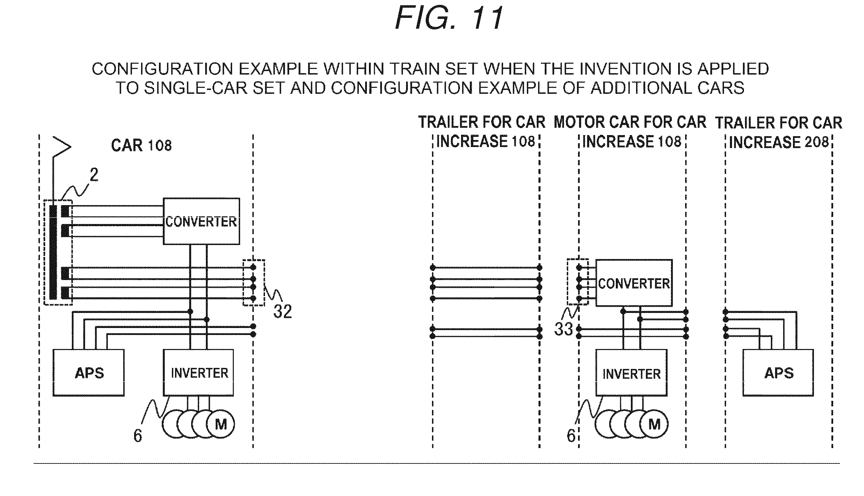

Fig. 11 shows an example in which Trailers or Motor cars are increased in a single-car train set. In the example, in order to secure traveling performance of the train set, an assumption that the rate of Motor cars within the train set is kept at 50% or more is made. In this regard, to equalize the re-adhesion characteristics in forward and backward traveling, it is desired that the Motor car and the Trailer are alternately added. In Fig. 11, a Trailer for car increase 108 is coupled to the side with the opened terminal 32 provided in a car 108 as a Motor car. Then, when a Motor car is increased, a Motor car for car increase 108 is coupled to the side not coupled to the car 108 of the added Trailer for car increase 108. Furthermore, when a Trailer is added next, a Trailer for car increase 208 is coupled to the side not coupled to the Trailer for car increase 108 of the added Motor car for car increase 108.

Obviously, if a car is coupled to the opposite side to the opened terminal 32 of the car 108, the Motor car and the Trailer may be alternately added to the train set constituted by a plurality of cars in the same manner.

## Claims

1. A train set constituted by coupling a plurality of cars, comprising:
a current collector that obtains power from outside of a train;
a transformation means that transforms the power supplied from the current collector;
a power conversion means that converts the power output from the transformation means into AC power having a variable voltage and variable frequency;
an AC motor driven by the power conversion means;
a first power supply cable having one end connected to a secondary side of the transformation means and the other end connected to the power conversion means and supplying the power output from the transformation means to the power conversion means; and
a second power supply cable having one end that can be connected to the secondary side of the transformation means and the other end electrically opened.

2. The train set according claim 1, wherein the power supply cable supplies single-phase AC power from the transformation means.

3. The train set according to claim 1 or 2, wherein the second power supply cable has a Line Breaker means that can selectively control interruption and conduction or an insulating means on an electrically opened terminal of the second power supply cable, or both of the Line Breaker means and the insulating means.

4. The train set according to any one of the previous claims, wherein, when another drive car having the power conversion means and the AC motor is added to the train set, the drive car is coupled to the car constituting the train set and having the electrically opened terminal of the second power supply cable, the power from the transformation means is supplied to the drive car via the electrically opened terminal, and thereby, the AC motor provided in the drive car is driven.

5. The train set according to claim 4 as dependent on claim 3, wherein the second power supply cable has the Line Breaker means and, when the train set is operated, the Line Breaker means is turned to an interruption state, and
when the drive car is added, the Line Breaker means is turned to a conduction state after electrical connection between the electrically opened terminal and the drive car is confirmed.

6. The train set according to claim 5, wherein, when the drive car added to the train set is removed, the Line Breaker means is turned to the interruption state.

7. A method of increasing cars constituting a train set including a current collector that obtains power from outside of a train, a transformation means that transforms the power supplied from the current collector, a power conversion means that converts the power output from the transformation means into AC power having a variable voltage and variable frequency, and an AC motor driven by the power conversion means,
when another drive car having the power conversion means and the AC motor is added to the train set, the method comprising:
coupling the drive car to the car constituting the train set and having a power supply cable with an end connected to an electrically opened connecting terminal;
supplying the power from the transformation means via the connecting terminal; and
driving the AC motor of the drive car.

8. The method of increasing cars constituting the train set according to claim 7, wherein the power supply cable supplies single-phase AC power from the transformation means.

9. The method of increasing cars constituting the train set according to claim 7 or 8, wherein the power supply cable has a Line Breaker means that can selectively control interruption and conduction or an insulating means on the connecting terminal, or both of the Line Breaker means and the insulating means,
if the train set has the Line Breaker means, the Line Breaker means is changed from an interruption state to a conduction state when the drive car is added, and
if the train set has the insulating means, the insulating means is detached when the drive car is added.

10. The method of increasing cars constituting the train set according to claim 9, wherein the power supply cable has the Line Breaker means and, when the drive car is added, the Line Breaker means is turned to the conduction state after electrical connection between the electrically opened terminal and the drive car is confirmed.
